# EUROPÄISCHE PATENTSCHRIFT

(11) **EP 1 745 540 B1**
(45) Veröffentlichungstag und Bekanntmachung des Hinweises auf die Patenterteilung: **24.09.2008**
(21) Anmeldenummer: 05737882.0
(22) Anmeldetag: 28.04.2005
(51) Int. Cl.: H02K 5/26, H02K 7/116

(54) **ELEKTROMOTOR UND GETRIEBE-ANTRIEBSEINHEIT FÜR STELLANTRIEBE IM KRAFTFAHRZEUG**
ELECTRIC MOTOR AND TRANSMISSION DRIVE UNIT FOR ACTUATORS IN A MOTOR VEHICLE
MOTEUR ELECTRIQUE ET UNITE D'ENTRAINEMENT DE TRANSMISSION DESTINES A DES ACTIONNEURS DANS UN VEHICULE

(30) Priorität: 03.05.2004 DE 102004021537
(43) Veröffentlichungstag der Anmeldung: 24.01.2007
(73) Patentinhaber: ROBERT BOSCH GMBH, 70442 Stuttgart (DE)
(72) Erfinder: OBERLE, Hans-Juergen, 76437 Rastatt (DE); SCHWENDEMANN, Franz, 77833 Ottersweier (DE); SCHEER, Dieter, 77830 Buehlertal (DE); MERKELBACH, Uwe, 76189 Karlsruhe (DE)
(86) Internationale Anmeldenummer: PCT/EP2005/051936
(87) Internationale Veröffentlichungsnummer: WO 2005/109607

(56) Entgegenhaltungen:
- WO-A-00/63515
- DE-A1- 3 036 865
- DE-A1- 19 539 017
- DE-A1- 19 615 053
- DE-C- 417 980
- DE-C- 861 944
- DE-C1- 4 038 551
- US-A- 5 792 573
- US-A- 5 803 427
- US-A1- 2001 043 021

## Beschreibung

### Stand der Technik

Die Erfindung betrifft einen Elektromotor und eine Getriebe-Antriebseinheit zur Verwendung in Verstellvorrichtungen im Kraftfahrzeug nach der Gattung des unabhängigen Anspruchs 1.

Mit der DE 100 19512 A1 ist ein Fensterheberantrieb bekannt geworden, dessen Gehäuse einen Poltopf und ein den Poltopf abschließendes Gehäuse umfasst. Das den Poltopf abschließende Gehäuse ist hierbei ein Getriebegehäuse mit einem integrierten Elektronikgehäuse, wobei zwischen den beiden Gehäuseteilen als Bürstenhalter ein separates Bauteil angeordnet ist, das gleichzeitig als Dichtung zwischen den beiden Gehäuseteilen dient. Der Poltopf besteht aus einem tiefgezogenen abgeflachten zylindrischen Rohr, an dessen offenem Ende ein Flansch angeformt ist, in dem Löcher zur Aufnahme von Schrauben ausgespart sind. Im Flansch des Getriebegehäuses sind Sackgewinde ausgeformt, in die die Schrauben eingedreht werden, wodurch die beiden Gehäuseteile fest miteinander verbunden sind. Im Flansch des Poltopfs sind mehr Aufnahmen ausgeformt, als für die Verbindung mit einem Getriebegehäuse benötigt werden. Ein solcher Poltopf eignet sich daher zur Verbindung mit unterschiedlichen Getriebegehäusen mit verschiedenen Gegenaufnahmen, jedoch muss hierbei der Elektromotor immer axial in das Getriebegehäuse montiert und befestigt werden. Aus diesem Grunde eignet sich der hierbei verwendete offene Elektromotor nicht für den Einsatz ohne Getriebegehäuse.

Mit der US 5,803,427 ist eine Befestigungsvorrichtung für eine Ölpumpe bekannt geworden, bei dem radial außen am mantelförmigen Motorgehäuse ein T-förmiger Verbindungssteg angeformt ist. Dieser Verbindungssteg kann in eine entsprechende Führungsschiene eingeführt werden, die den Elektromotor innerhalb eines Öltanks positioniert.

### Vorteile der Erfindung

Der erfindungsgemäße Elektromotor und die erfindungsgemäße Getriebe-Antriebseinheit mit den Merkmalen des Anspruchs 1 haben den Vorteil, dass durch das Einfügen der radialen Ausformung des Elektromotors in eine Führungsschiene des Getriebegehäuses der Elektromotor zusammen mit den anderen Getriebebauteilen radial in das Getriebegehäuse montiert werden kann. Beim Verschließen des Getriebegehäuses wird dabei der Elektromotor zuverlässig am Getriebegehäuse fixiert, ohne dass hierfür zusätzliche Befestigungsmittel für den Elektromotor notwendig sind. Andererseits schließt der Lagerdeckel das Polgehäuse zuverlässig ab, so dass der Elektromotor universal auch ohne Kombination mit einem Getriebegehäuse verwendet werden kann. Durch die Ausführung des Getriebegehäuses und des Polgehäuses als radial miteinander verbindbare Gehäuseteile können vorteilhaft schieberlose Spritzwerkzeuge bei der Herstellung verwendet werden, wodurch die Werkzeugkosten erheblich reduziert werden können. Die radiale Ausformung bildet eine kompakt, verbindungssteife Schnittstelle zwischen dem Elektromotor und beliebigen Gehäuseteilen und eignet sich daher besonders gut als universeller Basismotor. Die radiale Ausformung erlaubt eine baukastengerechte Fertigung des Elektromotors zur Kombination mit kundenspezifischen Schnittstellen, sowohl verschiedener Getriebegehäuse, als auch spezieller Befestigungsflansche. Außerdem erleichtert ein solches System die Demontierbarkeit einer solchen Antriebseinheit zu Zwecken der Reparatur oder des Recyclings.

Ist der Außendurchmesser der radialen Ausformung geringer als der Außendurchmesser des restlichen im Wesentlichen zylinderförmigen Polgehäuses, so kann auch der Durchmesser der entsprechenden Führungsschiene kleiner ausgebildet werden, so dass der Außendurchmesser des Getriebegehäuses an der Verbindungsstelle den Durchmesser des Polgehäuses nicht überragt. Auf diese Weise kann der Bauraum des Getriebegehäuses im Verbindungsbereich reduziert werden.

Durch die in den Unteransprüchen ausgeführten Merkmale sind vorteilhafte Weiterbildungen der Vorrichtung nach dem Anspruch 1 möglich. Je nach Fertigungsmethode des Polgehäuses kann die radiale Ausformung am Lagerdeckel des selben angeformt werden. Werden für den Lagerdeckel und den Mantel beispielsweise separate Stanzteile verwendet, können die radialen Ausformungen sehr günstig vor dem Zusammenbau des Polgehäuses als Stanzteile ausgebildet und gegebenenfalls entsprechend gebogen werden.

Wird das Polgehäuse mittels Tiefziehverfahren hergestellt, kann der Lagerdeckel sehr einfach einstückig an der Stirnseite des Mantels angeformt werden. Dadurch kann in einem Arbeitsschritt ein auf einer Seite geschlossener Poltopf hergestellt werden, wobei eine Öffnung für die aus dem Poltopf rausragende Ankerwelle freigespart wird. Durch die einteilige Ausbildung des Lagerdeckels mit dem Mantel des Polgehäuses kann das Kalottenlager und damit die Ankerwelle sehr genau mittig, innerhalb des Poltopfes angeordnet werden, wodurch die Montagetoleranzen zwischen dem Anker und dem Permanentmagneten reduziert werden.

Durch die Montage der beiden Lagerdeckel am Polgehäuse ist der Elektromotor auch ohne Getriebe als eigenständige Baueinheit verwendbar. Durch die Öffnung im Lagerdeckel wird eine effiziente Schnittstelle für die Kraftübertragung geschaffen. Dabei ragt die Ankerwelle durch die Öffnung aus dem Polgehäuse um mittels seines Abtriebselements eine Verstellvorrichtung anzutreiben. Alternativ greift zur Kraftkopplung eine Antriebswelle der Verstellvorrichtung durch die Öffnung formschlüssig in die Ankerwelle, die hierbei nicht aus dem Polgehäuse ragt.

Besonders günstig ist es, die radiale Ausformung als rund umlaufenden Bund auszubilden, da dann der Elektromotor in allen radialen Richtungen sicher in der korrespondierenden Führung gehalten wird. Dadurch kann die radiale Ausdehnung der radialen Ausformung relativ klein gehalten werden.

Eine solche radiale Ausformung kann beispielsweise sehr einfach beim Tiefziehverfahren erzeugt werden, indem ein bestimmter Wandabschnitt nach dem Ziehen gestaucht bzw. gefalzt wird, bis der Wandabschnitt mit seinen Innenflächen axial aneinander anliegt. Eine solche doppelwandige Ausführung der radialen Ausformung kann hohe Kräfte aufnehmen, woraus eine sehr feste und starre Verbindung zwischen dem Elektromotor und dem Getriebegehäuse resultiert.

Um den Elektromotor gegen ein Verdrehen im Getriebegehäuse oder im Befestigungsflansch zu sichern, sind in der radialen Ausformung Freisparungen ausgeschnitten, in die Material des Getriebegehäuses bzw. des Befestigungsflansches eingreift. Dadurch kann auf zusätzliche Verbindungsmittel wie Schrauben oder Nieten verzichtet werden.

Werden hohe Geräuschanforderungen an den Elektromotor gestellt, kann um den Polgehäuse-Mantel ein zweites Polrohr angeordnet werden, das die Motorgeräusche deutlich reduziert. Hierbei sorgt die Mikroreibung für eine Energieumwandlung von Schwingungs- in Reibungsenergie.

Zur eindeutigen Lagefixierung des Elektromotors gegenüber dem Getriebegehäuse und dem Befestigungsflansch ist am Lagerdeckel ein Zentrierzapfen angeformt, der beim Eingriff in eine entsprechende Gegenausformung den Elektromotor radial zentriert. Dabei kann der Bereich des Lagerdeckels, der im Innern beispielsweise ein Kalottenlager, ein Wälzlager oder eine Lagerhaltefeder aufnimmt, in axialer Richtung zylindrisch geformt werden, um konzentrisch zur Ankerwelle eine Zentrierung zu ermöglichen.

In einer weiteren Ausformung des Elektromotors sind zusätzlich zu der radialen Ausformung weitere radiale Stege am Polgehäuse angeformt, die zur Befestigung des Elektromotors an einen Festigungsflansch dienen. Dadurch kann für die Verwendung des Elektromotors ohne Getriebegehäuse eine frei gestaltbare, zuverlässige Verbindung zu einem Befestigungsflansch geschaffen werden.

Um den Elektromotor zuverlässig axial innerhalb des Getriebegehäuses zu fixieren, liegt die radiale Ausformung mit ihrer oberen und unteren axialen Anschlagsfläche an entsprechenden Führungsflächen der Führungsschiene im Getriebegehäuse an. Hierbei kann die Führungsschiene vorteilhaft als U-Profil ausgebildet sein, in das die radiale Ausformung eingreift.

Die gesamte Getriebe-Antriebseinheit kann vorteilhaft komplett radial montiert werden, indem der Elektromotor radial mit seinem Zentrierzapfen in eine entsprechende Gegenaufnahme des Getriebegehäuses eingelegt wird. Dabei wird die radiale Ausformung gleichzeitig in die Führungsschienen des Getriebegehäuses eingeführt, wodurch der Elektromotor auch axial fixiert ist. Des weiteren greifen radiale Materialvorsprünge innerhalb der Führungsschiene in Freisparungen der radialen Ausformung, so dass das Polgehäuse auch gegen eine Verdrehung gesichert ist. Durch das Verschließen des Getriebegehäuses mit einem radial montierbaren Deckel oder einer Halbschale, wird gleichzeitig auch der Elektromotor dauerhaft gegenüber einer Relativbewegung zum Getriebegehäuse gesichert.

Soll ein exakt baugleicher Elektromotor an einen beliebigen Befestigungsflansch befestigt werden, weist dieser Befestigungsflansch Verbindungselemente, beispielsweise Clipselemente oder Verstemmlaschen auf, die die radiale Ausformung vorzugsweise im Bereich der Freisparung in axialer Richtung umgreifen. Dadurch kann ein universeller Basismotor sowohl in einem Getriebegehäuse, als auch in einem beliebigen Befestigungsflansch befestigt werden, ohne bauliche Änderungen am Elektromotor vorzunehmen.

### Zeichnungen

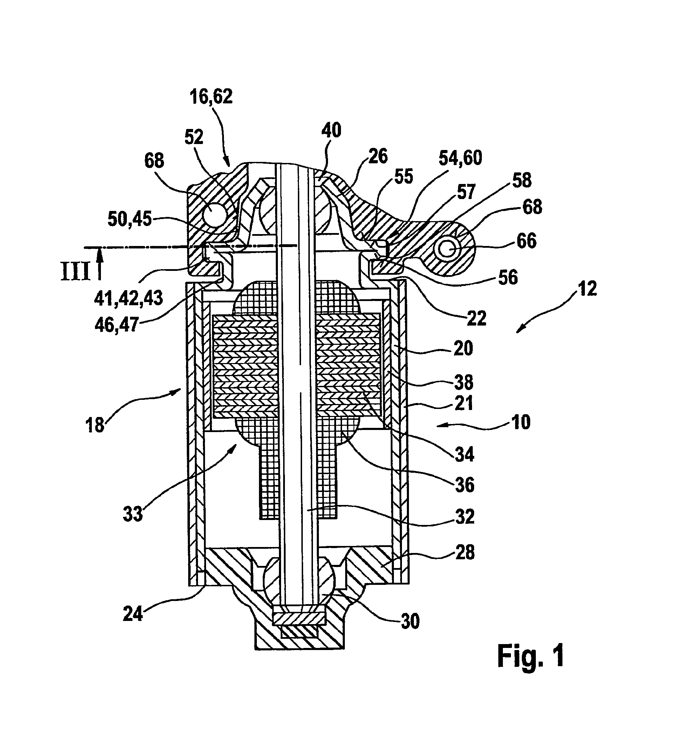

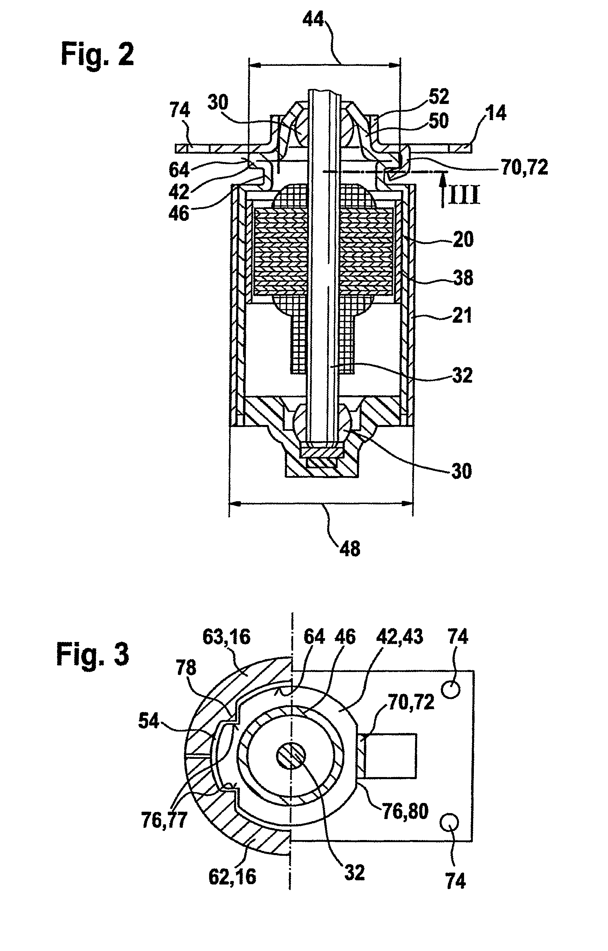

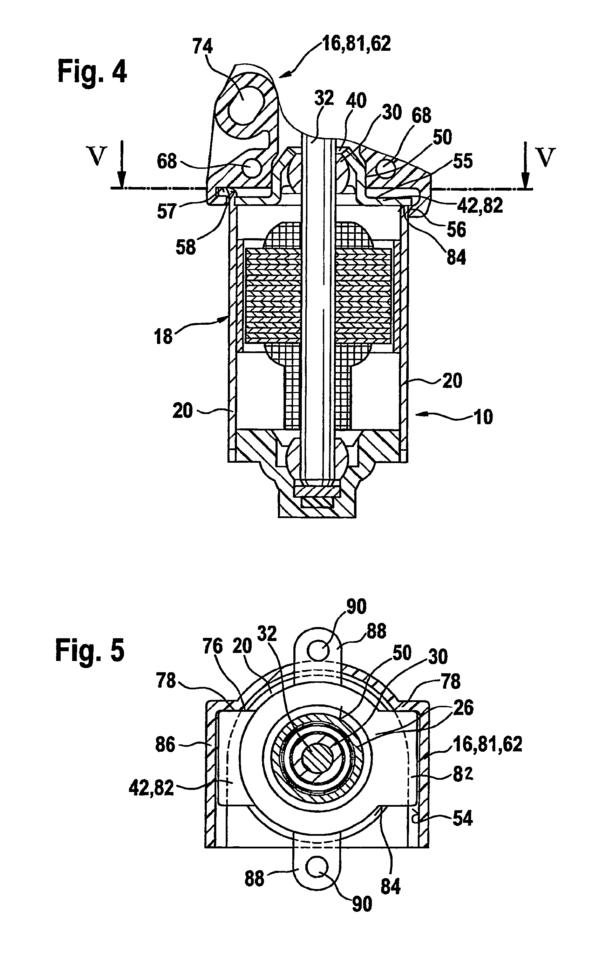

In der Zeichnung sind Ausführungsbeispiele der erfindungsgemäßen Vorrichtung sowie Beispiele, die das Verständnis der Erfindung erleichtern dargestellt und in der nachfolgenden Beschreibung näher erläutert. Es zeigen
Figur 1
   eine Getriebe-Antriebseinheit im Schnitt,
Figur 2
   einen in einem Befestigungsflansch montierter Elektromotor im Schnitt,
Figur 3
   einen Schnitt durch einen Elektromotor gemäss III-III in Figur 1 und 2,
Figur 4
   einen Längsschnitt durch eine weitere Getriebe-Antriebseinheit, die nicht zur Erfindung gehört, jedoch das Verständnis der Erfindung erleichtert,
Figur 5
   einen Querschnitt gemäss V-V in Figur 4, sowie
Figur 6
   einen Schnitt durch ein weiteres Ausführungsbeispiel mit Bajonett-Verbindung.

### Beschreibung der Ausführungsbeispiele

In Figur 1 ist eine Getriebe-Antriebseinheit 12 dargestellt, bei der ein separater Elektromotor 10 mit einem nur teilweise dargestellten Getriebegehäuse 16 verbunden ist. Der Elektromotor 10 weist ein Polgehäuse 18 mit einem Polgehäuse-Mantel 20 und an dessen Stirnseiten 22, 24 angeformte Lagerdeckel 26, 28 auf. Die Lagerdeckel 26, 28 nehmen Lager 30 auf, die im Ausführungsbeispiel als Gleitlager, insbesondere als Kalottenlager ausgebildet sind, in denen mittels einer Ankerwelle 32 ein Anker 33 gelagert ist. Auf der Ankerwelle 32 ist ein Ankerpaket 34 mit elektrischen Wicklungen 36 angeordnet, die mit Permanentmagneten 38 zusammenwirken, die am Polgehäuse-Mantel 20 angeordnet sind. Die Ankerwelle 32 durchdringt an der Stirnseite 22 den Lagerdeckel 26, indem hierin ein Loch 40 in axialer Richtung angeordnet ist. Die Ankerwelle 32 ragt mit einem nicht näher dargestellten Abtriebselement in das Getriebegehäuse 16, um über ein nicht näher dargestelltes Getriebe - beispielsweise ein Schneckengetriebe - ein Antriebsmoment für bewegliche Teile im Kraftfahrzeug zur Verfügung zu stellen. Das Polgehäuse 18 ist im Ausführungsbeispiel mittels Tiefziehen hergestellt, wobei der Mantel 20 einstückig mit dem Lagerdeckel 26 ausgebildet ist. Hierbei wird der Anker 33 zuerst in das Polgehäuse 18 montiert und mit der Ankerwelle 32 durch die Öffnung 40 geschoben und anschließend der separate Lagerdeckel 28 montiert. Für bestimmte Anwendungen wird zusätzlich eine zweite Polgehäusewand 21 auf dem Mantel 20 angeordnet, um die Geräuschbildung des Elektromotors 10 zu reduzieren. Im Bereich des Lagerdeckels 26 ist eine radiale Ausformung 42 angeformt, die einen größeren Außendurchmesser 44 hat, als die axial direkt benachbarten Bereiche 45 und 46. Der Außendurchmesser 44 ist hierbei idealerweise geringer als der Außerdurchmesser 48 des Polgehäuse-Mantels 20. Der Wandbereich 46 bildet hierbei einen Rezess 47 oder Hinterschnitt 47 zwischen der radialen Ausformung 42 und dem Mantel 20 des Polgehäuses 18. Der Bereich 45 des Lagerdeckels 26 ist als Zentrierzapfen 50 ausgebildet, der im montiertem Zustand in eine entsprechende Gegenausformung 52 des Getriebegehäuses 16 eingreift. Zur Befestigung des Elektromotors 10 am Getriebegehäuse 16 greift die radiale Ausformung 42 in Führungsschienen 54 des Getriebegehäuses 16, die zwei gegenüberliegende Führungsflächen 55, 56 aufweisen, an denen die radiale Ausformung 42 mit axialen Anschlägen 57 und 58 anliegt. Dadurch ist der Elektromotor 10 axial fest im Getriebegehäuse 16 fixiert. Die Führungsschiene 54 ist als U-Profil 60 ausgebildet, das halbkreisförmig in einer ersten Halbschale 62 des Getriebegehäuses 16 um den äußeren Rand 64 der radialen Ausformung 42 verläuft. Nach dem Einführen der radialen Ausformung 42 in die Führungsschiene 54 der ersten Halbschale 62 und der Montage des nicht dargestellten Getriebes, wird eine zweite Halbschale 63 radial zur Ankerwelle 32 auf die erste Halbschale 62 montiert und mit Verbindungselementen 66, die in Aufnahmen der beiden Getriebegehäuseteile 62, 63 greifen, miteinander verbunden. Die radiale Ausformung 42 weist hierbei keine Aufnahmen für Verbindungselemente zwischen dem Elektromotor 10 und dem Getriebegehäuse 16 auf, so dass der Elektromotor 10 allein durch die Verbindung der Getriebegehäuseteile 62 und 63 zuverlässig mit diesen verbunden ist.

In Figur 2 ist exakt der selbe Elektromotor 10 dargestellt, der aber bei diesem Ausführungsbeispiel nicht mit einem Getriebegehäuse 16 kombiniert ist, sondern auf einen Befestigungsflansch 14 montiert ist. Dazu greift der Zentrierzapfen 50 axial in eine Gegenausformung 52 des Befestigungsflansches 14 bis die Anschlagsfläche 57 der radialen Ausformung 42 am Befestigungsflansch 14 anliegt. Zur Befestigung des Elektromotors 10 umgreifen Verbindungsmittel 70 die radiale Ausformung 42 in axialer Richtung, so dass auch die zweite axiale Anschlagfläche 58, beispielsweise an einer Verstemmlasche 72 des Befestigungsflansches 14 anliegt. Alternativ können die Verbindungsmittel 70 auch als Clipselemente oder als Presspassung ausgebildet sein. Die radiale Ausformung 42 ist wie in Figur 1 als umlaufender Bund 43 ausgebildet, der beim Tiefziehen des Polgehäuses 18 einstückig mit diesem als gefaltetes Doppelblech 41 ausgebildet ist. Der Befestigungsflansch 14 weist kundenspezifische Aufnahmen 74 auf, mittels derer der Elektromotor 10 mit dem Befestigungsflansch 14 an einem Kraftfahrzeugteil befestigt werden kann.

Figur 3 zeigt einen schematischen Querschnitt gemäss der Linie III-III, wobei die linke Hälfte sich auf das Ausführangsbeispiel gemäss Figur 1 und die rechte Hälfte auf das Ausführungsbeispiel gemäss Figur 2 bezieht. Die radiale Ausformung 42 ist als umlaufender Bund 43 ausgeführt, wobei dieser in der linken Hälfte zwei Einschnitte 77 als Freisparungen 76 aufweist, in die Material 78 der beiden Getriebegehäuseteile 62 und 63 eingreift Dabei ist das eingreifende Material 78 bei der Ausführung gemäss Figur 1 innerhalb der Führungsschiene 54 zwischen den Führungsflächen 55 und 56 angeordnet. Durch diesen Materialeingriff 78 des Getriebegehäuses 16 ist der Elektromotor 10 gegen ein Verdrehen gesichert. Bei einer Variation der radialen Ausformung 42 gemäss der rechten Hälfte in Figur 3 ist die Freisparung 76 als seitliche Abflachung 80 ausgebildet, die von der Verstemmlasche 72 des Befestigungsflansches 14 umgriffen wird. Eine solche Abflachung 80 stellt ebenfalls eine Verdrehsicherung dar und kann wie die Einschnitte 77 sowohl für den Befestigungsflansch 14, als auch für das Getriebegehäuse 16 verwendet werden.

In Figur 4 ist als Beispiel, welches das Verständnis der Erfindung erleichtert, Getriebe-Antriebseinheit 12 dargestellt, bei der das Polgehäuse 18 nicht als Tiefziehteil ausgebildet ist, sondern einen gerollten, gebogenen Mantel 20 aufweist. Dabei ist der Lagerdeckel 26 mit der Öffnung 40 für die Ankerwelle 32 als separates Bauteil ausgebildet, das an der Stirnseite 22 mit dem Mantel 20 verbunden ist. Auf der linken Bildhälfte ist hierbei die radiale Ausformung 42 einstückig an den Mantel 20 des Polgehäuses 18 angeformt und in etwa rechtwinklig zu diesem abgebogen. Die radiale Ausformung 42 erstreckt sich nicht über dem gesamten Umfang des Mantels 20, sondern ist als zwei gegenüberliegende Stege 82 ausgebildet. Diese Stege 82 weisen wiederum zwei axiale Anschlagsfläche 57 und 58 auf, die an korrespondierende Führungsflächen 55 und 56 der Führungsschiene 54 des Getriebegehäuses 16 anliegen.

In einem weiteren Beispiel, welches das Verständnis der Erfindung erleichtert, dargestellt in der rechten Bildhälfte der Figur 4, ist die radiale Ausformung 42 direkt am Lagerdeckel 26 angeformt und ragt radial über den Umfang des Mantels 20 hinaus. Die radiale Ausformung 42 ist hier ebenfalls als radialer Steg 82 ausgebildet, der durch eine Aussparung 84 im Mantel 20 greift. Die radiale Ausformung 42 wird wiederum radial zur Ankerwelle 32 in seitliche Führungsschienen 54 eines Getriebegehäusegrundkörpers 81 eingeschoben, wobei die beiden Führungsflächen 55 und 56 radial versetzt angeordnet sind. Der Zentrierzapfen 50 ist ebenfalls radial in die entsprechende Gegenausformung 52 des Getriebegehäusegrundkörpers 81 eingeführt, wobei dieses anschließend mit einem nicht dargestellten Deckel verschlossen wird. Nahezu weist der Getriebegehäuse-Grundkörper 81 Aufnahmen 68 für Verbindungselemente 66 auf, die gewährleisten, dass der Elektromotor 10 axial und radial gesichert in seiner Lage im Getriebegehäuse 16 verbleibt. Des weiteren weist das Getriebegehäuse 16 Aufnahmen 74 auf, um die Getriebe-Antriebseinheit 12 am Kraftfahrzeug zu befestigen.

Figur 5 zur Verdeutlichung des Beispiels, welches das Verständnis der Erfinding erleichtert, zeigt einen Querschnitt entsprechend V-V in Figur 4, wobei die gegenüberliegenden radialen Stege 82, die am Mantel 20 oder am Lagerdeckel 26 angeformt sind, in die Führungsschiene 54 des Getriebegehäuses 16 eingreifen. Bei dieser Ausführung erstrecken sich die beiden Führungsschienen 54 nur über die Seitenwand 86 des Gehäusegrundkörpers 81. Das Getriebegehäuse 16 besteht hierbei nicht aus zwei symmetrischen Halbschalen 62, 63, sondern aus dem Grundkörper 81 mit den Seitenwänden 86 und einem nicht näher dargestellten Deckel. Zusätzlich weist das Polgehäuse 18 bei dieser Ausführung weitere radiale Befestigungslaschen 88 auf, um den Elektromotor 10 bei einer Ausführung ohne Getriebe, an dem Befestigungsflansch 14 zu befestigen. Die Befestigungslaschen 88 weisen daher Aufnahmen 90 für Verbindungselemente - beispielsweise Schrauben oder Nieten - auf, mit denen der Elektromotor 10 mit dem Befestigungsflansch 14 verbindbar ist. Je nach Kundenanforderung ist der Befestigungsflansch 14 beispielsweise aus Stahl oder Kunststoff gefertigt und stellt eine kundenspezifische mechanische Schnittstelle zur Verstellvorrichtung dar. Die Befestigungslaschen 88 sind beispielsweise ebenfalls einstückig am Mantel 20 oder am Lagerdeckel 26 des Polgehäuses 18 angeformt. Um die Einführung der radialen Ausformung 42 in die Führungsschiene 54 des Getriebegehäuses 16 zu ermöglichen, sind die Befestigungslaschen 88 vorzugsweise axial versetzt zu den radialen Ausformungen 42 angeordnet, so das diese bei einer Kombination mit einem Getriebegehäuse 16 außerhalb diesem anliegen. Durch die Ausbildung der radialen Ausformung 42 als gegenüberliegende Stege 82, weist die radiale Ausformung 42 zwischen den Stegen 82 ebenfalls Freisparungen 76 auf, in die gemäß Figur 5 Material 78 des Getriebegehäuse-Grundkörpers 81 eingreift, um eine Drehung des Elektromotors 10 zu verhindern.

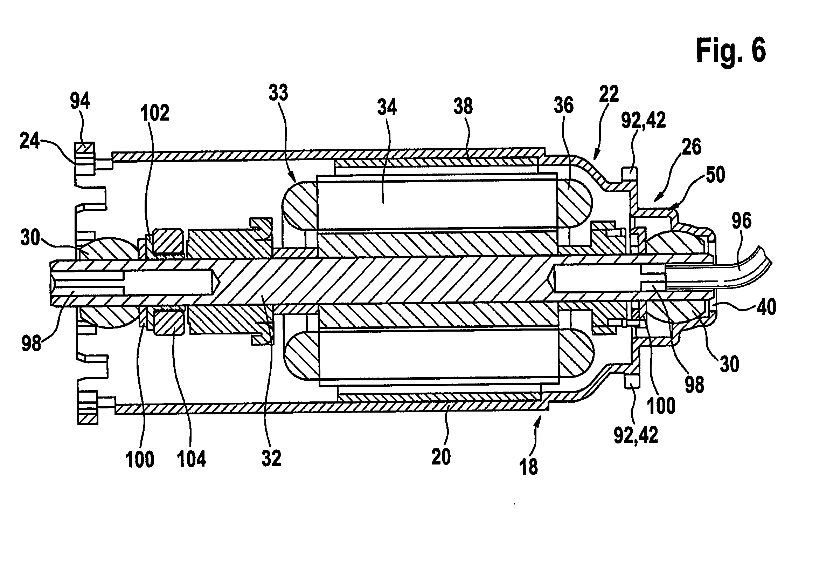

Der Elektromotor gemäß Figur 6 weist als mechanische Schnittstelle zur Verbindung mit dem Getriebegehäuse 16 oder dem Befestigungsflansch 14 eine Art von Bajonett-Verschluss auf. Hierzu ist die radiale Ausformung 42 nicht als umlaufender Bund, sondern als in Umfangsrichtung mit Abstand zueinander angeordnete Bajonett-Stege 92 ausgebildet, die in eine nicht dargestellte ringförmige, unterbrochene Führungsschiene 54 des Getriebegehäuses 16 oder des Befestigungsflanschs 14 greifen kann. Dazu wird der Elektromotor 10 zuerst axial in die korrespondierende Schnittstelle geschoben und dann nach Art des Bajonett-Verschlusses um einen bestimmten Winkel verdreht und optional auch verrastet. Bei dieser Verbindung muss das Gehäuse 16 - ebenso wie der Befestigungsflansch 14 - keine mindestens zwei radial verbindbaren Halbschalen aufweisen, sondern kann beliebig als Bajonett-Verbindung geformt sein. Die radiale Ausformung 42 ist hier am einstückig mit dem Mantel 20 ausgebildeten Lagerdeckel 26 angeformt, kann aber auch alternativ am anderen Ende angeformt sein, der mit einem separaten Lagerdeckel 28 zum Zusammenbau des Elektromotors 10 verschließbar ist. Hierzu weist der Mantel 20 biegbare Befestigungslaschen 94 auf, die um entsprechende Fortsätze des Lagerdeckels 28 geformt werden. Die Ankerwelle 32 erstreckt sich im Wesentlichen über die Länge des Polgehäuses 18, so dass zur Kraftankopplung ein Kopplungselement 96 (bspw. eine Flexwelle 96) durch die Öffnung 40 im Lagerdeckel 26 in ein Innenvielkant 98 (bspw. Ein Vierkant 98) der Ankerwelle 32 greift. Ein solcher Drehmomentabgriff ist optional an einer oder an beiden Seiten 22, 24 des Polgehäuses 18 möglich. Zwischen den Lagern 30 und dem Anker 33 sind Anlaufscheiben 100 vorzugsweise aus Kunststoff angeordnet, mit denn sich die Ankerwelle 32 axial an den Lagern 30 abstützt. Die Anlaufscheiben 100 sind dabei drehfest mit der Ankerwelle 32 bzw. mit den auf dieser angeordneten Ankerbauteile 102, wie beispielsweise einer Aufnahmehülse 102 für einen Ringmagneten 104, verbunden.

Es sei angemerkt, daß folgende weiteren Modifikationen möglich sind :

Die Freisparungen 76 können sowohl für die Kombination mit einem Getriebegehäuse 16, als auch mit einem Befestigungsflansch 14 beliebig geformt sein, solange ein Formschluss mit dem eingreifenden Material 78 zur Drehsicherung des Elektromotors 10 hergestellt ist. Entsprechend können die Führungsschiene 54, bzw. die Verbindungsmittel 70 des Befestigungsflansches 14 modifiziert werden, so dass deren Material immer in einen Hinterschnitt 47 greift, der durch die radiale Ausformung 42 in Verbindung mit dem sich axial anschließenden Bereich 46 gebildet wird. Die Ausführung des Ankers 33, des Getriebegehäuses 16 und des Getriebes können dabei beliebigen bekannten Anwendungen entsprechen. Die Besonderheit der Erfindung besteht dabei darin, dass ein identischer Elektromotor 10 als Basismotor 10 für ein Baukastenprinzip zur Kombination mit verschiedenen Getriebegehäusen 16 oder Befestigungsflanschen 14 verwendet wird, ohne das für die Verbindung zu einem sich anschließenden Gehäuse 16 separate Verbindungsmittel notwendig sind. Bevorzugt wird der erfindungsgemäße Elektromotor 10, bzw. die Getriebe-Antriebseinheit 12 für Sitzverstellvorrichtungen im Kraftfahrzeug eingesetzt, kann aber auch für beliebige andere Stellantriebe verwendet werden.

## Patentansprüche

1. Elektromotor (10) für Stellantriebe im Kraftfahrzeug mit einer Ankerwelle (3 2), die in einem Polgehäuse (18) gelagert ist, das einen Mantel (20) und an mindestens einer Stirnseite (22, 24) einen Lagerdeckel (26, 28) zur Aufnahme eines Lagers (30) für die Ankerwelle (32) aufweist, wobei am Polgehäuse (18) eine radiale Ausformung (42) ausgebildet ist, die nach dem kompletten Zusammenbau des Polgehäuses (18) zum radialen Eingriff in eine Führungsschiene (54) eines Getriebegehäuses (16) geeignet ist, um den Elektromotor (10) ohne weitere Verbindungsmittel an dem Getriebegehäuse (16) zu befestigen, **dadurch gekennzeichnet, dass** die radiale Ausformung (42) einen Außendurchmesser (44) aufweiset, der kleiner ist als der Außendurchmesser (48) des Polgehäuse-Mantels (20).

2. Elektromotor (10) nach Anspruch 1, **dadurch gekennzeichnet, dass** die radiale Ausformung (42) am Lagerdeckel (26) angeformt ist.

3. Elektromotor (10) nach einem der Ansprüche 1 oder 2, **dadurch gekennzeichnet, dass** der Lagerdeckel (26) einstückig mit dem Mantel (20) des Polgehäuses (18) - insbesondere mittels Tiefziehverfahren - ausgebildet ist.

4. Elektromotor (10) nach einem der vorhergehenden Ansprüche, **dadurch gekennzeichnet, dass** der Lagerdeckel (26) eine zentrale Öffnung (40) aufweist, durch die die Ankerwelle (32) oder eine in die Ankerwelle (32) eingreifende Getriebewelle 0 - insbesondere eine Flexwelle 0 - greift.

5. Elektromotor (10) nach einem der vorhergehenden Ansprüche, **dadurch gekennzeichnet, dass** die radiale Ausformung (42) als umlaufender Bund (43) ausgebildet ist.

6. Elektromotor (10) nach einem der vorhergehenden Ansprüche, **dadurch gekennzeichnet, dass** die radiale Ausformung (42) als gefalztes Doppelblech (41) ausgebildet ist.

7. Elektromotor (10) nach einem der vorhergehenden Ansprüche, **dadurch gekennzeichnet, dass** ein axiale direkt zur radialen Ausformung 42 benachbarter Wandbereich 46 einen Rezess 47 oder Hinterschnitt 47 zwischen der radialen Ausformung 42 und dem Mantel 20 des Polgehäuses 18 bildet.

8. Elektromotor (10) nach einem der vorhergehenden Ansprüche, **dadurch gekennzeichnet, dass** zur Drehsicherung des Elektromotors (10) an der radialen Ausformung (42) Freisparungen (76, 77, 80) ausgebildet sind, in die Material (78) des Getriebegehäuses (16) oder eines Befestigungsflansches (14) eingreifbar ist.

9. Elektromotor (10) nach einem der vorhergehenden Ansprüche, **dadurch gekennzeichnet, dass** der Polgehäuse-Mantel (20) doppelwandig ausgeführt ist.

10. Elektromotor (10) nach einem der vorhergehenden Ansprüche, **dadurch gekennzeichnet, dass** der Lagerdeckel (26) einen axialen Zentrierzapfen (50) zum Eingriff in eine korrepondierende Gegenausformung (52) des Getriebegehäuses (16) oder in einen korrespondierenden Befestigungsflansch (14) aufweist.

11. Getriebe-Antriebseinheit (12) mit einem Elektromotor (10) nach einem der vorhergehenden Ansprüche und einem Getriebegehäuse (16), **dadurch gekennzeichnet, dass** das Getriebegehäuse (16) mindestens eine Führungsschiene (54) zur Aufnahme der radialen Ausformung (42) mittels radialem Einfügen oder mittels Bajonett-Verschluss aufweist.

12. Getriebe-Antriebseinheit (12) mit einem Elektromotor (10) nach Anspruch 11, **gekennzeichnet durch** mindestens zwei radial miteinander verbindbare Gehäuseschalen (62, 63, 81).

13. Getriebe-Antriebseinheit (12) mit einem Elektromotor (10) nach Anspruch 11 oder 12, **dadurch gekennzeichnet, dass** die Führungsschiene (54) zwei gegenüberliegende, in etwa senkrecht zur Ankerwelle (32) angeordnete Führungsflächen (55, 56) aufweist, an denen die radiale Ausformung (42) mit zwei axialen Anschlagsflächen (57, 58) anliegt.

14. Getriebe-Antriebseinheit (12) mit einem Elektromotor (10) nach Ansprüchen 10, 12 und einem der Ansprüche 11-13, **dadurch gekennzeichnet, dass** der Elektromotor (10) mittels des Zentrierzapfens (50) in einer Gegenaufnahme (52) des Getriebegehäuses (1) zentriert und mittels der in die Führungsschiene (54) greifenden radialen Ausformung (42) axial und/oder gegen eine Drehung fixiert und mittels Verbindungselementen (66), die die Getriebegehäuseschalen (62, 63, 81) miteinander verbinden, gesichert ist.

15. Elektromotor (10) nach Anspruch 10 sowie einem der vorhergehenden Ansprüche 1-9 mit einem Befestigungsflansch (14), der Aufnahmen (74) für Haltemittel zur Halterung an einem Kraftfahrzeugteil aufweist, **dadurch gekennzeichnet, dass** der Zentrierzapfen (50) in einer Gegenaufnahme (52) des Befestigungsflansches (14) zentriert ist, und der Elektromotor (10) mittels Verbindungsmitteln (70, 72), die die **radiale** Ausformung (42) umgreifen, am Befestigungsflansch (14) befestigt ist.

## Claims

1. Electric motor (10) for actuating drives in a motor vehicle, comprising an armature shaft (32) which is mounted in a pole housing (18) which has a casing (20) and, at at least one end face (22, 24), a bearing cover (26, 28) for holding a bearing (30) for the armature shaft (32), with a radial shaped portion (42) being formed on the pole housing (18), which radial shaped portion is suitable for radially engaging in a guide rail (54) of a gear mechanism housing (16) after complete assembly of the pole housing (18) in order to fix the electric motor (10) to the gear mechanism housing (16) without further connection means, **characterized in that** the radial shaped portion (42) has an outside diameter (44) which is smaller than the outside diameter (48) of the pole housing casing (20).

2. Electric motor (10) according to Claim 1, **characterized in that** the radial shaped portion (42) is integrally moulded on the bearing cover (26).

3. Electric motor (10) according to either of Claims 1 and 2, **characterized in that** the bearing cover (26) is integrally formed with the casing (20) of the pole housing (18) - in particular by means of deep-drawing.

4. Electric motor (10) according to one of the preceding claims, **characterized in that** the bearing cover (26) has a central opening (40) through which the armature shaft (32) or a gear mechanism shaft - in particular a flexible shaft - which engages in the armature shaft (32) passes.

5. Electric motor (10) according to one of the preceding claims, **characterized in that** the radial shaped portion (42) is in the form of a circumferential collar (43).

6. Electric motor (10) according to one of the preceding claims, **characterized in that** the radial shaped portion (42) is in the form of a folded double metal sheet (41).

7. Electric motor (10) according to one of the preceding claims, **characterized in that** a wall region (46) which is axially directly adjacent to the radial shaped portion (42) forms a recess (47) or an undercut (47) between the radial shaped portion (42) and the casing (20) of the pole housing (18).

8. Electric motor (10) according to one of the preceding claims, **characterized in that** clearances (76, 77, 80) into which material (78) of the gear mechanism housing (16) or a fixing flange (14) can engage are formed on the radial shaped portion (42) for securing the electric motor (10) against rotation.

9. Electric motor (10) according to one of the preceding claims, **characterized in that** the pole housing casing (20) is of double-walled design.

10. Electric motor (10) according to one of the preceding claims, **characterized in that** the bearing cover (26) has an axial centring pin (50) for engaging in a corresponding mating shaped portion (52) of the gear mechanism housing (16) or in a corresponding fixing flange (14).

11. Gear mechanism/drive unit (12) comprising an electric motor (10) according to one of the preceding claims and a gear mechanism housing (16), **characterized in that** the gear mechanism housing (16) has at least one guide rail (54) for holding the radial shaped portion (42) by means of radial insertion or by means of a bayonet fitting.

12. Gear mechanism/drive unit (12) comprising an electric motor (10) according to Claim 11, **characterized by** at least two housing shells (62, 63, 81) which can be connected to one another in a radial manner.

13. Gear mechanism/drive unit (12) comprising an electric motor according to Claim 11 or 12, **characterized in that** the guide rail (54) has two opposite guide faces (55, 56) which are arranged approximately perpendicular to the armature shaft (32) and against which the radial shaped portion (42) rests by way of two axial stop faces (57, 58).

14. Gear mechanism/drive unit (12) comprising an electric motor (10) according to Claims 10, 12 and one of Claims 11-13, **characterized in that** the electric motor (10) is centred in a mating holder (52) of the gear mechanism housing (1) by means of the centring pin (50), and is fixed axially and/or against rotation by means of the radial shaped portion (42) which engages in the guide rail (54), and is secured by means of connection elements (66) which connect the gear mechanism housing shells (62, 63, 81) to one another.

15. Electric motor (10) according to Claim 10 and one of the preceding Claims 1-9, comprising a fixing flange (14) which has holders (74) for retaining means for mounting on a motor vehicle part, **characterized in that** the centring pin (50) is centred in a mating holder (52) of the fixing flange (14), and the electric motor (10) is fixed to the fixing flange (14) by means of connection means (70, 72) which surround the radial shaped portion (42).

## Revendications

1. Moteur électrique (10) pour des actionneurs destinés à des véhicules automobiles comportant un arbre d'induit (32) monté dans un boîtier polaire (18) ayant une enveloppe (20) et au moins sur une face frontale (22, 24), un chapeau de palier (26, 28) pour recevoir un palier (30) de l'arbre d'induit (32),
le boîtier polaire (18) ayant une déformation radiale (42) qui, une fois l'assemblage complet du boîtier polaire (18) réalisé, vient prendre radialement dans un rail de guidage (54) du boîtier de transmission (16), pour fixer le moteur électrique (10) sans autre moyen de liaison au boîtier de transmission (16),
**caractérisé en ce que**
la déformation radiale (42) a un diamètre extérieur (44) inférieur au diamètre extérieur (48) de l'enveloppe (20) du boîtier polaire.

2. Moteur électrique (10) selon la revendication 1,
**caractérisé en ce que**
la déformation radiale (12) est réalisée sur le chapeau de palier (26).

3. Moteur électrique (10) selon la revendication 1 ou 2,
**caractérisé en ce que**
le chapeau de palier (26) est réalisé en une seule pièce avec l'enveloppe (20) du boîtier polaire (18), notamment par un procédé d'emboutissage profond.

4. Moteur électrique (10) selon l'une des revendications précédentes,
**caractérisé en ce que**
le chapeau de palier (26) a une ouverture centrale (40) à travers laquelle passe l'arbre d'induit (32) ou un arbre de transmission notamment un arbre souple en prise avec l'arbre d'induit (32).

5. Moteur électrique (10) selon l'une des revendications précédentes,
**caractérisé en ce que**
la déformation radiale (42) est une collerette périphérique (43).

6. Moteur électrique (10) selon l'une des revendications précédentes,
**caractérisé en ce que**
la déformation radiale (42) est une double tôle (41) pliée.

7. Moteur électrique (10) selon l'une des revendications précédentes,
**caractérisé en ce qu'**
une zone de paroi (46) voisine axialement, directement de la déformation radiale (42) comporte une cavité (47) ou une partie en contredépouille (47) entre la déformation radiale (42) et l'enveloppe (20) du boîtier polaire (18).

8. Moteur électrique (10) selon l'une des revendications précédentes,
**caractérisé en ce que**
la déformation radiale (42) comporte des dégagements (76, 77, 80) pour bloquer en rotation le moteur électrique (10), déformation dans laquelle vient prendre la matière (78) du boîtier de transmission (16) ou d'une bride de fixation.

9. Moteur électrique (10) selon l'une des revendications précédentes,
**caractérisé en ce que**
l'enveloppe (20) du boîtier polaire est une enveloppe à double paroi.

10. Moteur électrique (10) selon l'une des revendications précédentes,
**caractérisé en ce que**
le chapeau de palier (26) comporte un tourillon axial de centrage (50) pour prendre dans une déformation complémentaire (52) correspondante du boîtier de transmission (16) ou dans une bride de fixation correspondante (14).

11. Unité moteur/transmission (12) comprenant un moteur électrique (10) selon l'une des revendications précédentes et un boîtier de transmission (16),
**caractérisée en ce que**
le boîtier de transmission (16) comporte au moins un rail de guidage (54) pour recevoir la déformation radiale (42) par un assemblage radial ou par une liaison de type baïonnette.

12. Unité moteur/transmission (12) comprenant un moteur électrique (10) selon la revendication 11,
**caractérisée par**
au moins deux coquilles de boîtier (62, 63, 81) reliées radialement l'une à l'autre.

13. Unité moteur/transmission (12) comprenant un moteur électrique (10) selon la revendication 11 ou 12,
**caractérisée en ce que**
le rail de guidage (54) comporte deux surfaces de guidage (55, 56) qui se font face et sont sensiblement perpendiculaires à l'arbre d'induit (32) et contre lesquelles s'appuie la déformation radiale (42) avec deux surfaces de butées axiales (57, 58).

14. Unité moteur/transmission (12) comprenant un moteur électrique (10) selon l'une des revendications 10 et 12 ainsi que l'une des revendications 11 à 13,
**caractérisée en ce que**
le moteur électrique (10) est centré par le goujon de centrage (50) dans un logement complémentaire (52) du boîtier de transmission (1) et il est fixé par l'intermédiaire de la déformation radiale (42) pénétrant dans le rail de guidage (54), axialement et/ou il est bloqué en rotation et fixé par des éléments de liaison (66) qui relient les coupelles de boîtier de transmission (62, 63, 81).

15. Unité moteur/transmission (12) comprenant un moteur électrique (10) selon la revendication 10 ainsi que l'une des revendications précédentes 1 à 9, comportant une bride de fixation (14) munie de logements (74) pour des moyens d'accrochage servant à se fixer à une partie du véhicule automobile,
**caractérisée en ce que**
le goujon de centrage (50) est centré dans un logement complémentaire (52) de la bride de fîxation (14) et le moteur électrique (10) est fixé à la bride de fixation (14) par des moyens de liaison (70, 72) qui entourent la déformation radiale (42).
